# EUROPEAN PATENT SPECIFICATION

(11) **EP 0 572 434 B1**
(45) Date of publication and mention of the grant of the patent: **17.07.1996**
(21) Application number: 92903395.9
(22) Date of filing: 28.01.1992
(51) Int. Cl.: C02F 1/00, C02F 1/58, E02B 11/00

(54) **A METHOD FOR REDUCING THE PHOSPHORUS AND HEAVY METAL LOAD IMPOSED ON LAKES AND WATERWAYS BY FARMLANDS**
METHODE ZUR HERABSETZUNG DER PHOSPHOR-UND SCHWERMETALLBELASTUNG VON SEE- UNDWASSERWEGEN DURCH BAUERNLAND
PROCEDE DE REDUCTION DES CHARGES DE PHOSPHORE ET DE METAUX LOURDS DEVERSEES DANS LES LACS ET LES COURS D'EAU PAR DES EXPLOITATIONS AGRICOLES

(30) Priority: 08.02.1991 FI 910640
(43) Date of publication of application: 08.12.1993
(73) Proprietor: OY PARTEK AB, SF-21600 Parainen (FI)
(72) Inventor: WEPPLING, Kjell, Jonny, Maurits, SF-21600 Parainen (FI); DAHLBERG, Kjell, Anders, Martin, SF-21600 Parainen (FI); PALKO, Jukka, Kalervo, SF-90100 Oulu (FI)
(74) Representative: Johnstone, Helen Margaret
(86) International application number: FI9200018
(87) International publication number: WO9213803

(56) References cited:
- CA-A- 1 079 650
- DE-A- 3 023 968
- GB-A- 2 064 931
- US-A- 3 625 010
- DERWENT'S ABSTRACT, No. 91-214 358/29, SU,A,1606602, publ. week 9129.
- PATENT ABSTRACTS OF JAPAN, Vol. 10, No. 214, C362, Abstract of JP,A,61 054 282, publ 1986-03-18 (MITSUBISHI HEAVY IND LTD).

## Description

The invention relates to a method for reducing the phosphorus and heavy metal load imposed on lakes and waterways by farmlands. The method enables a decisive reduction in the amount of erosion material, phosphorus and heavy metals transported from sloping clayey farmlands through surface run-off. In this way the load on the lower lakes and waterways is reduced.

Today the load caused by agriculture is regarded as a major environmental factor in the eutrophication process. The leaching of nutrients from farmlands and their transport with the erosion material into lakes and waterways and opportunities for reducing the nutrient amounts have given rise to a lively discussion.

Among the eutrophic nutrients, one of the most important is phosphorus.

Most of the phosphorus originating from farmlands is carried into lakes and waterways with the erosion material. Accordingly, the problem concerns mainly sloping farmlands adjoining a lake or a waterway. Researches show that a slope as small as 2 to 3 degrees may already be sufficient to cause erosion. A substantially smaller proportion of the phosphorus is transported into the waters in dissolved form with seepage water. Against this background, the problem with the transport of nutrients is mainly limited to the spring and autumn season when the run-off amounts are at maximum and the fields generally have no protective plant cover.

To reduce the load, various solutions have been suggested, such as cultivation and fertilization methods, establishment of protective zones, and improving the drainage of fields.

From the agricultural point of view, the transport of nutrients can be affected e.g. by the selection of soil preparation methods and cultivated plants. Such methods include green fallowing, direct sowing, protective soil preparation and ploughing transverse to a slope (in the direction of the altitude contours). These techniques aim at reducing the amount of surface run-off and thus the sensitivity of the surface layer to erosion.

Solutions based on the use of fertilizers mainly aim at accurate determination of the amounts and types of fertilizers used. Soil tests are used to determine the nutrient content and fertilization requirement of farmlands, and so the nutrient load caused by overdosage of fertilizers can be reduced. This is also aimed at by adjusting the phosphorus content of fertilizers and by spreading the fertilizers more accurately (placement fertilizing).

Protective strips and zones adjoining a lake or waterway are uncultivated areas covered with permanent vegetation which are left between sloping farmlands and waters. They reduce the erosion transport to some extent. To be effective, such zones should be wide enough.

The improvement of the water economy of farmlands by appropriate subsurface drainage is of vital importance for the water pollution control. Poor water economy and the use of heavy machinery cause the soil to be compacted, especially clay soils. This increases the amount of erosion phosphorus transported into the lakes and waterways with the surface run-off.

There is only limited experience from the use of the above alternatives for reducing the load caused by the transport of nutrients from farmlands. Results from researches have been fairly promising, although it is necessary in most cases to combine the different techniques to obtain good results. The techniques also have disadvantages, which hamper their full utilization and call for the research and development of new methods.

Technically, the selection of a soil preparation technique suitable from the point of view of water protection should not be difficult if only the suitability of such a technique for the cultivation can be proved sufficiently convincingly. This has not yet been possible.

The reduction of the nutrient load imposed on waterways by selecting suitable cultivated plants is difficult especially on farms specialized in grain growing.

By increasing the utilization of soil tests, the fertilization can be adopted to the actual nutrient requirement of cultivated plants. In this way the overfertilization of farmlands can be reduced, especially the overdosage of phosphorus. These measures, however, do not have any immediate influence on the phosphorus load imposed on lakes and waterways. Most of the phosphorus transported into the waters originates from a phosphorus reserve retained in the soil particles of the cultivation layer at an earlier stage.

Protective zones left between farmlands and waters reduce the erosion phosphorus load at least to some extent. In many cases, however, the formation of sufficiently wide zones is problematic as farmers are not willing to give up their best agricultural land for this purpose. As yet there is no more accurate information available on the required widths, but tens or even hundreds of metres may be required as far as steep agricultural areas are concerned.

To reduce the nutrient transport from sloping farmlands, the drainage of the farmlands is of essential importance. This requires that appropriate subsurface draining should be performed and the top-soil should be kept porous and water permeable. However, the soil is often compacted rather rapidly (especially with the use of heavy machinery), and so the amount of surface run-off increases accordingly. This applies to clayey soils in particular. On such areas, the maintenance of good water economy has proved to be difficult if not impossible by the present methods.

US patent number 3625010 discloses an embankment erosion prevention system in which a shallow excavation is dug in the ground. The excavation is filled with filler material such as crushed stone. Neither the filler material nor the top soil is chemically treated.

To avoid the above described disadvantages, the present invention relates to the alteration of the structure and properties of soil layers. The invention enables a reduction in the amount of erosion phosphorus transported to the lower lakes and waterways especially from sloping clayey farmlands. This is achieved by substantially improving the water permeability of the soil. By directing the measures according to the invention locally in an appropriate way, the most important erosion paths loading the waters can be efficiently blocked. The invention also enables an efficient reduction in the amounts of dissolved phosphorus and heavy metals in seepage water.

The invention concerns a method for reducing the phosphorus and heavy metal load imposed on lakes and waterways by farmlands, especially clayey farmlands, wherein the natural flow paths of water from farmlands to lakes and waterways are blocked by means of a zone formed between the farmlands and the waters. The method is characterized in that the soil of the zone is treated with a substance improving the water permeability and crumb structure of the soil in such a way that the treated soil retains efficiently the erosion material, phosphorus compounds and heavy metals contained in the water.

The invention is mainly based on improving the water permeability of soil and binding nutrients to the soil. On clayey areas, the water permeability properties can be decisively promoted by improving the crumb structure of soil and its durability. This decreases sensitivity to erosion. With the high water permeability, the transport of substances dissolved in seepage water into the lower lakes and waterways is also reduced as fine-grained clayey soils are able to efficiently "catch" nutrients in both cation and anion form.

By means of the present invention, the crumb structure of clayey soil is improved chemically by mixing suitable chemicals with it. Such chemicals include dehydrated lime (CaO) and its derivatives, hydrated lime (Ca(OH)₂), desulphurization products obtained from the desulphurization process of flue gases, or mixtures of the above-mentioned substances. Carbonate-based soil improvement limes (CaCO₃, CaMg(CO₃)₂) traditionally used in agriculture do not have a similar effect on the crumb structure of soil as the present invention. The chemical is mixed with the soil to be treated e.g. by means of a mechanical power mixer suited for the purpose. The obtained chemically stabilized crumb structure is permanent.

Experiments carried out show that the chemical is needed in an amount of at least 2% by weight, preferably 5 to 15% by weight, of the soil mass to be treated to achieve and sustain a crumb structure providing optimal water permeability properties. The preferred chemical and its amount naturally depend on the properties of the soil to be treated.

Chemically, the improvement in the crumb structure of soil is due to an increase in the Ca²⁺ content of the soil solution and the attachment of these ions to the ion exchange positions of the soil. The clay particles are thereby coagulated into larger groups or aggregates. At the same time the soil pH increases (pH > 12), and the soluble phosphorus contained in the soil solution is precipitated in the soil layer as poorly soluble calcium phosphate. In addition, the high pH causes hydrolyzable metals present in the soil solution to be precipitated into poorly soluble hydroxides, which are further mineralized or attached tightly to the surface of the clay particles.

Sulphur compounds to be added together with the above-mentioned lime products (in this specific case in the form of flue gas desulphurization product) promote the formation of long needle-like ettringite crystals in clay soil. They make the aggregation of clay particles more efficient and increase the durability of the aggregates.

As a result of the above-described chemical treatment, the water permeability of clayey soils is improved substantially with a resultant reduction in the amount of surface run-off loading the lower lakes and waterways and in the amount of erosion phosphorus contained in the run-off. At the same time the content of soluble phosphorus and heavy metals in the water percolated through the treatment layer is reduced.

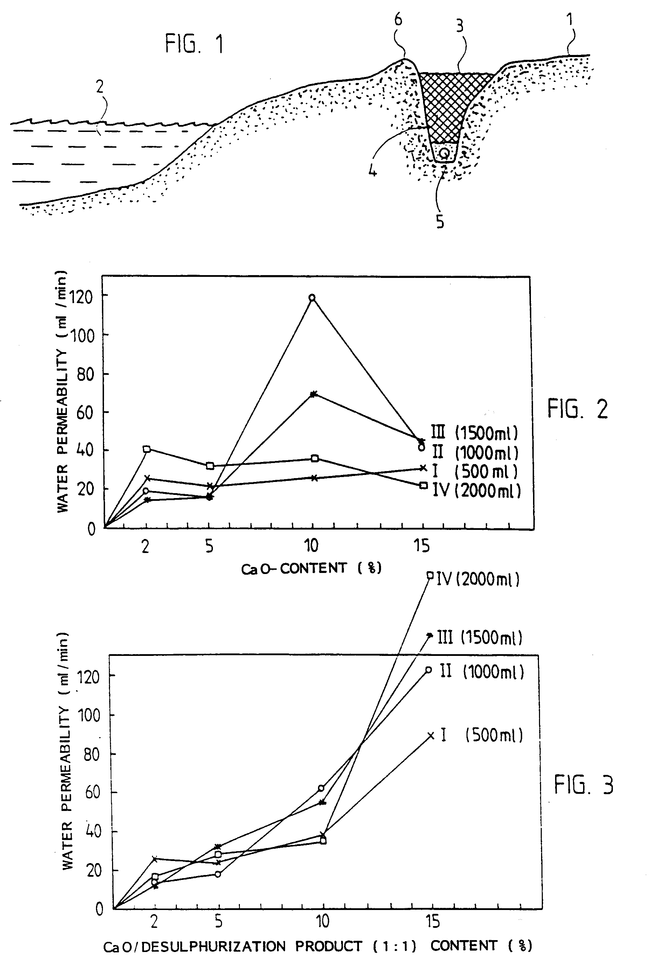

Figure 1 shows a preferred embodiment of the present invention. In Figure 1, a leach trench 3 runs between a farmland 1, such as a field or other similar area, and a lake or waterway 2 on the waterside in parallel with the shoreline. The leach trench 3 is filled with soil 4 treated in accordance with the invention. On the bottom of the leach trench 3 there is provided a draining pipe 5. In Figure 1, the edge of the leach trench 3 on the waterside is formed into a low bank 6.

The depth of the leach trench is preferably 60 to 80 cm, and its width at the bottom is generally about 30 to 40 cm and at the top about 100 to 120 cm. After the installation of the draining pipe the trench is filled with soil dug up and treated with the substance improving water permeability and crumb structure. The low bank (generally about 20 cm) on the waterside helps to control the absorption of the run-off water and makes it more efficient. Water passed through the leach trench is led through the draining pipe directly into the lake or waterway.

When complete, leach trenches operate similarly as large filters. Due to their porous durable crumb structure, they absorb efficiently the surface run-off, and bind the phosphates and metals contained in the water percolating through them. Thus the water passed through the leach trenches does not load the lower lakes and waterways. The most important advantages of the trenches are: efficient removal of phosphorus, efficient removal of solids, avoidance of broad protective zones, and a low construction cost.

Figures 2 and 3 show the water permeability of the treated soil in relation to the CaO content and to the CaO/desulphurization product (1:1) content. Phosphorus-containing water was percolated through the samples four times at 0.5 bar. The water permeability of untreated soil was zero.

In the first percolation, the addition of CaO resulted in a water permeability of 20 to 30 ml/min for clay soil. With the 2 and 5% additions, the water permeability of the samples did not change significantly from the first to the second and third percolation. In the fourth percolation, the water permeability increased to about 40 ml/min with these samples. With the 10% addition, the water permeability of the sample varied greatly in the different percolations; in the second percolation the water permeability was as high as 120 ml/min and in the third percolation 70 ml/min. With the 15% addition, the water permeability varied between 20 and 50 ml/min in all four percolations. With the 2 and 5% additions of CaO and desulphurization product (1:1), the water permeability of clay soil varied between 15 and 30 ml/min in all four percolations. At the concentration of 10%, the water permeabilities varied between 30 and 60 ml/min, and at the concentration of 15% between 80 and 170 ml/min. With the two greatest additions, the water permeability increased with increasing amount of percolating water.

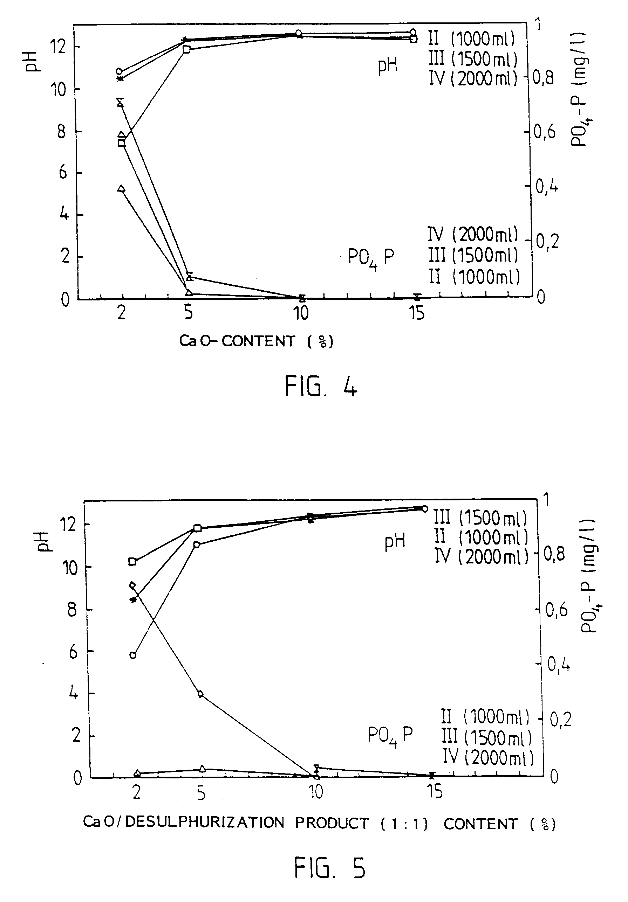

Figures 4 and 5 show the pH values and the phosphorus contents of the leachates in relation to the CaO/desulphurization product (1:1) content.

The 2% addition of calcium oxide to clay soil increased the pH of the leachate to 10.8 after the percolation of 1,000 ml, and the phosphorus content of the leachate was 0.6 mg/l. Correspondingly, the pH decreased to 10.5 after the following percolation of 1,500 ml, and the phosphorus content decreased to 0.4 mg/l; after the percolation of 2,000 ml, the pH of the leachate was 7.4, and the phosphorus content was 0.72 mg/l. With the 5% CaO addition, the pH of the leachates was of the order of 12 in all elutions. After the 1,000 ml elution, the leachates did not contain phosphorus, and after 1,500 ml and 2,000 ml, the phosphorus content increased slightly (0.02 and 0.08 mg/l). With the 10% and 15% additions of lime, the pH of the leachate remained at about 12.5, whereby the soil sample retained all phosphorus.

The 2% addition of calcium oxide and desulphurization product (1:1) to clay soil increased the pH of the leachate to 10.2 after the percolation of 2,000 ml, and the phosphorus content of the leachate was 0.02 mg/l. Correspondingly, the 5% addition increased the pH to 11.2, the phosphorus content being 0.03 mg/l. The pH of the leachates obtained with the greater additions (10 and 15%) was more than 12.0 during the filtration tests, whereby all ortho-phosphate contained in the leachate was also retained in the sample.

## Claims

1. A method for reducing the phosphorus and heavy metal load imposed on lakes and waterways by farmlands, especially clayey farmlands, wherein the natural flow paths of water from farmlands to lakes and waterways are blocked by means of a zone formed between the farmlands and the waters, characterised in that the soil of the zone is treated with a substance improving the water permeability and crumb structure of the soil, said substance being selected from a group consisting of dehydrated lime and its derivatives, hydrated lime, flue gas desulphurization product, gypsum, calcium silicate and their mixture.

2. A method according to claim 1, characterised in that the zone is a leach trench filled with the treated soil.

3. A method according to claim 2, characterised in that a draining pipe is provided on the bottom of the leach trench.

4. A method according to claim 2 or 3, characterised in that the edge of the trench on the waterside is in the form of a bank.

5. A method according to any of claims 1 to 4, characterised in that the soil of the zone contains at least 2% by weight of the substance improving water permeability and crumb structure.

6. A method according to claim 5, characterised in that the amount of the substance improving water permeability and crumb structure is 5 to 15% by weight.

## Patentansprüche

1. Verfahren zur Herabsetzung der Phosphor- und Schwermetallbelastung von Seen und Wasserwegen durch Ackerland, insbesondere tonhaltiges Ackerland, worin die natürlichen Fließwege von Wasser aus Ackerland zu Seen und Wasserwegen mittels einer zwischen dem Ackerland und den Gewässern ausgebildeten Zone blockiert werden, dadurch gekennzeichnet, daß der Boden der Zone mit einer Substanz behandelt wird, die die Wasserpermeabilität und Krumenstruktur des Bodens verbessert, wobei die Substanz ausgewählt ist aus einer Gruppe bestehend aus dehydratisiertem Kalk und seinen Derivaten, hydratisiertem Kalk, Rauchgasentschwefelungsprodukt, Gips, Calciumsilicat und Mischungen davon.

2. Verfahren nach Anspruch 1, dadurch gekennzeichnet, daß die Zone ein mit dem behandelten Boden gefüllter Siskergraben ist.

3. Verfahren nach Anspruch 2, dadurch gekennzeichnet, daß am Grund des Sickergrabens ein Drainagerohr vorgesehen ist.

4. Verfahren nach Anspruch 2 oder 3, dadurch gekennzeichnet, daß der Rand des Grabens auf der Wasserseite in Form einer Uferböschung ausgebildet ist.

5. Verfahren nach einem der Ansprüche 1 bis 4, dadurch gekennzeichnet, daß der Boden der Zone mindestens 2 Gew.-% der Substanz enthält, die Wasserpermeabilität und Krumenstruktur verbessert.

6. Verfahren nach Anspruch 5, dadurch gekennzeichnet, daß die Menge der Substanz, die Wasserpermeabilität und Krumenstruktur verbessert, 5 bis 15 Gew.-% beträgt.

## Revendications

1. Procédé pour réduire la charge de phosphore et de métaux lourds déversée dans les lacs et cours d'eau par des terrains agricoles, notamment des terrains agricoles argileux, dans lequel les chemins d'écoulement naturel de l'eau depuis les terrains agricoles jusqu'aux lacs et cours d'eau sont bloqués au moyen d'une zone formée entre les terrains agricoles et les eaux, caractérisé en ce que la terre de la zone est traitée avec une substance améliorant la perméabilité à l'eau et la structure granuleuse de la terre, ladite substance étant choisie dans le groupe formé par la chaux vive et ses dérivés, la chaux éteinte, un produit de désulfuration de gaz de carneau, le gypse, le silicate de calcium et leurs mélanges.

2. Procédé selon la revendication 1, caractérisé en ce que la zone est une tranchée de filtration remplie de la terre traitée.

3. Procédé selon la revendication 2, caractérisé en ce qu'un tuyau de drainage est disposé au fond de la tranchée de filtration.

4. Procédé selon la revendication 2 ou 3, caractérisé en ce que le bord de la tranchée du côté des eaux est sous la forme d'un talus.

5. Procédé selon l'une quelconque des revendications 1 à 4, caractérisé en ce que la terre de la zone contient au moins 2 % en poids de la substance améliorant la perméabilité à l'eau et la structure granuleuse.

6. Procédé selon la revendication 5, caractérisé en ce que la teneur en la substance améliorant la perméabilité à l'eau et la structure granuleuse est de 5 à 15 % en poids.
